Europäisches Patentamt

European Patent Office

Office européen des brevets

(11) Veröffentlichungsnummer: **0 077 753**
A2

(12) **EUROPÄISCHE PATENTANMELDUNG**

(21) Anmeldenummer: **82810403.4**

(22) Anmeldetag: **27.09.82**

(51) Int. Cl.³: **B 65 B 35/34**
**B 65 G 47/08**

(30) Priorität: **15.10.81 CH 6603/81**

(43) Veröffentlichungstag der Anmeldung:
**27.04.83 Patentblatt 83/17**

(84) Benannte Vertragsstaaten:
**DE FR GB IT NL**

(71) Anmelder: **SIG Schweizerische Industrie-Gesellschaft**

**CH-8212 Neuhausen am Rheinfall(CH)**

(72) Erfinder: **Walz, Theo**
**Schwimmbadstrasse 432**
**CH-8213 Neunkirch(CH)**

(74) Vertreter: **White, William et al,**
**c/o Patentanwaltsbureau ISLER & SCHMID**
**Walchestrasse 23**
**CH-8006 Zürich(CH)**

(54) **Vorrichtung zum Aufteilen von in einer Reihe zulaufenden Gegenständen und Verfahren zum Betrieb der Vorrichtung.**

(57) Bei dieser Vorrichtung werden die Gegenstände (G) in einer Zuführrinne (10) mittels Vibration als Reihe einer Aufnahmerinne (11) zugeführt. Durch die Vibrationsförderung liegen die Gegenstände in loser Berührung aneinander und an einem Abholschieber (13) an. Ein Trennschwert (12) kann somit an der Uebergabestelle (15) ohne Druck zwischen zwei benachbarte Gegenstände hineinstechen, um die Gruppe auf der Aufnahmerinne (11) von der Reihe auf der Zuführrinne (10) abzuteilen. Die Vibration der Zuführrinne (10) kann verkleinert oder verlangsamt werden, wenn das Trennschwert (12) abgesenkt wird, um den Druck zwischen sich folgenden Gegenständen noch zusätzlich zu verringern. Damit kann die Trennstelle durch das Trennschwert (12) leicht gefunden werden. Es wird an keiner Stelle dieser Vorrichtung ein Druck auf die Gegenstände ausgeübt, so dass auch leicht zerbrechliche Gegenstände und solche mit unregelmässiger Form auf diese Weise in Gruppen aufgeteilt werden können.

**0077753**

SIG Schweizerische
Industrie-Gesellschaft
CH-8212  Neuhausen am Rheinfall

Vorrichtung zum Aufteilen von in einer Reihe zulaufenden Gegenständen und Verfahren zum Betrieb der Vorrichtung

---

Die vorliegende Erfindung betrifft eine Vorrichtung zum Aufteilen von in einer Reihe zulaufenden Gegenständen gemäss dem Oberbegriff des unabhängigen Patentanspruchs 1, sowie ein Verfahren zum Betrieb der Vorrichtung gemäss dem Oberbegriff des unabhängigen Patentanspruchs 6.

Gegenstände, wie Biskuits, werden oftmals in aufrechter Stellung in einer Reihe transportiert, von der mittels einer Aufnahmerinne und einem Abholschieber Gruppen mit gleicher Anzahl Gegenstände abgetrennt werden und mit der Aufnahmerinne einer Verpackungsstation oder gegebenenfalls einer weiteren Transporteinrichtung zugeführt werden. Bei einer bekannten Ausführungsform gemäss dem DE-Gbm 7 223 053 werden die Biskuits auf einer Zuführrinne mit starkem Gefälle durch ihre Schwerkraft nach unten transportiert. Die mit einem Abholstössel auf eine Schaufel geleiteten Biskuits bilden die abgetrennte Gruppe. Zum Anhalten der Reihe sind ein Sicherungsschieber, ein Vorlaufpresser und ein Hauptpresser vorhanden. Der Hauptpresser liegt auf einer Mehrzahl von Gegenständen auf und der Vorlaufpresser dient zum
Anhalten des vordersten Biskuits der Reihe während des
Schwenkens der Schaufel zur Entladestation hin und zurück.

Die Kraft, die mit den Pressern auf die Biskuits ausgeübt
wird, muss genau bemessen sein, um diese nicht zu zerdrücken
oder zu wenig fest zu halten, was nur bei genau masshaltigen
Biskuits der Fall sein kann; bei kleineren oder zu grossen
Biskuits ist die Kraft falsch.

Gemäss einer weiteren Ausführungsform nach der CH-A 380 635
werden die scheibenförmigen Biskuits hochkant auf einem
Transportband gefördert und über eine feststehende Platte
auf einen Aufnahmetisch geschoben. Der Transport auf der
Platte und auf dem Aufnahmetisch erfolgt durch den Druck
der nachfolgenden Biskuits auf dem Transportband. Durch diesen Druck und mit der Reibung zwischen Randfläche und Platte
und/oder Aufnahmetisch können die Biskuits umkippen. Ein
Trennmittel, z.B. ein Trennschieber oder Trennschwert, das
von oben zwischen zwei benachbarte Biskuits hineingeschoben
wird, muss zwei mit dem genannten Druck zusammengepresste
Biskuits voneinander trennen.

Während hier die umgekippten Biskuits Betriebsstörungen verursachen, kann das Trennmittel ein oder beide benachbarte
Biskuits beschädigen.

Es ist deshalb eine Aufgabe der Erfindung, eine Vorrichtung
zu schaffen, mit der die Biskuits ohne Druck bis zu einem
Abholschieber gefördert werden können und auch auf einer
Aufnahmerinne mit einem minimalen Druck, der gerade genügt,
damit die Biskuits dem Abholschieber folgen, weitergefördert
werden. Zudem soll an der Uebergabestelle auf die Aufnahmerinne der Druck zwischen zwei benachbarten Biskuits gering
sein, derart, dass mit einem Trennmittel ohne Gefahr einer
Beschädigung zwischen die Biskuits hineingestochen werden
kann.

Erfindungsgemäss wird dies durch die Merkmale im kennzeichnenden Teil des unabhängigen Patentanspruchs 1 erreicht.
Ein Verfahren zum Betrieb der Vorrichtung ist im kennzeichnenden Teil des Nebenanspruchs 6 definiert.

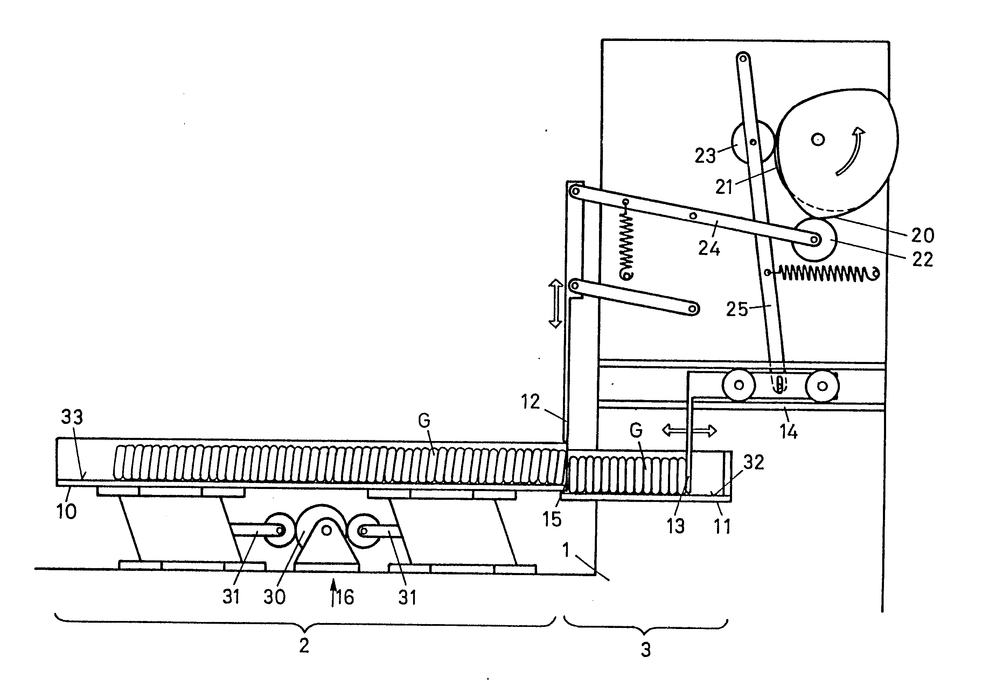

Ein Ausführungsbeispiel der Erfindung wird nachfolgend anhand der Zeichnung beschrieben, in der eine Vorrichtung zum
Aufteilen von in einer Reihe zulaufenden Gegenständen schematisch im Aufriss dargestellt ist.

Auf einem Maschinenständer 1 sind eine erste Fördereinrichtung 2 mit einer Zuführrinne 10 und einem Schwingantrieb 16 sowie eine zweite Fördereinrichtung 3 mit einer Aufnahmerinne 11 und einem Abholschieber 13 aufgebaut. Ein Trennschwert 12 ist vertikalbeweglich an einem Hebelarm 25 mit Parallelführung befestigt und der Hebelarm 25 ist mit einer Abtastrolle 22 und einer Kurvenscheibe 20 in üblicher Weise gesteuert.

Der Abholschieber 13 ist in einer Geradeführung 14 translatorisch geführt und über einen Hebelarm 24, eine Abtastrolle 23 und eine Kurvenscheibe 21 angetrieben. Der Antrieb zum Verschwenken der Aufnahmerinne 11 ist nicht dargestellt, er kann aber ebenso aus Kurvenscheibe, Abtastrolle und Gestänge gebildet sein.

Die Kurvenscheiben 21, 22 für das Trennschwert 12 und den Abholschieber 13, sowie allenfalls für die Aufnahmerinne 11, können auf einer gemeinsamen Antriebsachse befestigt sein, oder allenfalls über Getriebe miteinander synchronisiert sein, um den gegebenen Arbeitstakt synchron beizubehalten.

Der Schwingantrieb 16 kann mechanisch aus Exzenterscheibe 30 und Abtastrolle 31 bestehen, wobei als Schwingelement ein Federelement (nicht dargestellt) vorgesehen sein könnte,
oder er könnte einen elektromagnetischen Antrieb mit Magnetspule und Anker umfassen. Da derartige Schwingantriebe in
der Technik bekannt sind, kann hier auf eine eingehende
Beschreibung desselben verzichtet werden. Wesentlich ist
lediglich, dass die Frequenz und/oder die Amplitude der
Vibration, die auf die Zuführrinne 10 übertragen wird, einstellbar ist, um die Vibration in Abhängigkeit des oben beschriebenen Arbeitstaktes zu verändern, z.B. indem die
Vibration beim Verschwenken der Aufnahmerinne 11 verlangsamt oder verkleinert oder unterbrochen werden kann.

Auch kann vorgesehen werden, dass der Abholschieber 13
keine gleichförmige Bewegung ausführt, sondern anfänglich
eine Abholbewegung mit relativ hoher Geschwindigkeit und
am Ende des Hubes mit verringerter Geschwindigkeit ausführt.

Mit einer vibrierenden Zuführrinne können die Gegenstände G
wenigstens angenähert horizontal bewegt werden, so dass
kein Druck auf vorangehende Gegenstände ausgeübt wird. Das
Trennschwert 12 kann in die Reihe eingreifen, wobei es ebenfalls ohne Druck auf die Gegenstände auszuüben die Reihe
aufhalten kann.

Vorteilhafterweise liegt die Bodenfläche 32 der Aufnahmerinne 11 um einen Betrag in der Grössenordnung von 5 mm
tiefer als die Bodenfläche 33 der Zuführrinne. Durch diesen
Absatz bei der Uebergabestelle 15 wird eine zusätzliche
Lockerung der Reihe von Gegenständen G bewirkt, so dass das
Trennschwert 12 noch leichter zwischen zwei sich folgende
Gegenstände hineinstechen kann.

Die Zuführrinne 10 und gegebenenfalls auch die Abholrinne 11
können beschichtet sein, um den Reibungskoeffizienten zwischen den Gegenständen G einerseits und der Bodenfläche
32 und/oder der Bodenfläche 33 anderseits zu beeinflussen
und möglicherweise auch den Lärm infolge der Vibration zu
vermindern.

Die Arbeitsweise kann die folgende sein: Mit der Zuführrinne
10 werden die Gegenstände G in einer Reihe, deren vorderes
Ende am Abholschieber 13 anliegt, gefördert. Die Fördergeschwindigkeit kann durch Verlangsamen oder Verkleinern der
Vibration verkleinert werden. Wenn der Abholschieber 13
den vorgegebenen Weg auf der Aufnahmerinne 11 zurückgelegt
hat, sticht das Trennschwert 12 in die Reihe hinein und
trennt die gebildete Gruppe ab. Schliesslich übergibt die
Aufnahmerinne 11 die Gruppe an eine weitere, nicht dargestellte Station und kehrt in die Ausgangslage zurück. Der Abholschieber 13 kann gleichzeitig mit der Aufnahmerinne 11 oder vor deren Rückkehrbewegung in die Abnahmestellung zurücklaufen und wenn der Abholschieber 13 den vordersten Gegenstand der Reihe hält, kann das Trennschwert 12 nach oben bewegt werden.

Die Vorteile einer derartigen Vorrichtung im Vergleich zum beschriebenen Stand der Technik liegen vor allem beim Aufteilen der Reihe durch das Einstechen des Trennschwertes 12, indem die Trennstelle sicher auffindbar ist und die benachbarten Gegenstände, auch wenn diese eine unregelmässige Gestalt haben, ohne Beschädigung voneinander trennbar sind. Es werden keine Klemmvorrichtungen zum Anhalten der Reihe benötigt und die Zuführrinne 10 kann horizontal angeordnet sein.

**0077753**

SIG Schweizerische
Industrie-Gesellschaft

8212 Neuhausen am Rheinfall

P a t e n t a n s p r ü c h e

1.     Vorrichtung zum Aufteilen von in einer Reihe zulaufenden Gegenständen in untereinander gleich grosse Gruppen, mit einer ersten, die Gegenstände (G) zuführenden Fördereinrichtung (2), einem die Fortbewegung der Gegenstände
auf dieser ersten Fördereinrichtung zeitweilig unterbrechenden Sperrorgan (12) und mit einer zweiten Fördereinrichtung
(3) zum Bilden und Abtransport der Gruppen, dadurch gekennzeichnet, dass die erste Fördereinrichtung (2) ein Vibratorförderer mit einer Zuführrinne (10) und einem diese bewegenden Schwingantrieb (16) ist.

2.     Vorrichtung nach Patentanspruch 1, dadurch gekennzeichnet, dass die zweite Fördereinrichtung (3) eine Aufnahmerinne (11) mit einem translatorisch verschiebbar geführten Abholschieber (14) ist.

3.    Vorrichtung nach Patentanspruch 2, dadurch gekennzeichnet, dass die unteren Auflageflächen (31,32) von Zuführrinne (10) und Aufnahmerinne (11) in der Höhe gegeneinander versetzt angeordnet sind.

4.    Vorrichtung nach Patentanspruch 3, dadurch gekennzeichnet, dass die Versetzung in der Grössenordnung von 5 mm liegt.

5.    Vorrichtung nach einem der Patentansprüche 1 bis 3, dadurch gekennzeichnet, dass die Zuführrinne (10) mit einer Auskleidung zur Beeinflussung des Reibungskoeffizienten gegenüber den Gegenständen (G) versehen ist.

6.    Verfahren zum Betrieb der Vorrichtung nach Patentanspruch 1, dadurch gekennzeichnet, dass die Schwingung der Vibration der Zuführrinne (10) wenigstens während des Eingreifens des Sperrorgans (12) verändert wird, und dass der Abholschieber (14) mit veränderlicher Geschwindigkeit translatorisch verschoben wird.

7.    Verfahren nach Patentanspruch 6, dadurch gekennzeichnet, dass die Amplitude und/oder die Frequenz der Schwingung verändert wird.

8.    Verfahren nach Patentanspruch 5, dadurch gekennzeichnet, dass die Vibration der Zuführrinne (10) zeitweilig angehalten wird.

9.    Verfahren nach Patentanspruch 6, dadurch gekennzeichnet, dass die Vibration beim Eingreifen des Sperrorgans (12) vermindert wird, und dass die Verschiebegeschwindigkeit des Abholschiebers (13) gegen das Ende des Transportweges zur Bildung einer Gruppe verlangsamt wird.